# EUROPÄISCHE PATENTSCHRIFT

(11) **EP 2 951 077 B1**
(45) Veröffentlichungstag und Bekanntmachung des Hinweises auf die Patenterteilung: **10.05.2017**
(21) Anmeldenummer: 13776817.2
(22) Anmeldetag: 15.10.2013
(51) Int. Cl.: B62D 1/16

(54) **LENKSÄULE IN FASERVERBUNDTECHNOLOGIE, BASIEREND AUF PULTRUSION- UND FLECHT- UND/ODER WICKELTECHNOLOGIE**
STEERING COLUMN PRODUCED FROM FIBRE-COMPOSITE AND ON THE BASIS OF PULTRUSION, BRAIDING AND/OR WINDING TECHNOLOGY
COLONNE DE DIRECTION DANS LA TECHNOLOGIE DE COMPOSITES RENFORCÉS PAR DES FIBRES, À BASE DE LA TECHNOLOGIE D'EXTRUSION PAR ÉTIRAGE ET DE LA TECHNOLOQIE DE TRESSAGE ET/OU D'ENROULEMENT

(30) Priorität: 29.01.2013 DE 102013001442
(43) Veröffentlichungstag der Anmeldung: 09.12.2015
(73) Patentinhaber: ThyssenKrupp Presta AG, 9492 Eschen (LI); ThyssenKrupp AG, 45143 Essen (DE)
(72) Erfinder: HEITZ, Thomas, CH-9493 Mauren (LI); REGNER, Sebastian, 88131 Lindau (DE); SCHACHT, Arne, A-6800 Feldkirch (AT); KREUTZ, Daniel, A-6800 Feldkirch (AT)
(74) Vertreter: ThyssenKrupp Intellectual Property GmbH
(86) Internationale Anmeldenummer: PCT/EP2013/071508
(87) Internationale Veröffentlichungsnummer: WO 2014/117876

(56) Entgegenhaltungen:
- EP-A1- 0 900 943
- WO-A1-99/03716
- DE-A1-102012 000 633

## Beschreibung

Die Erfindung bezieht sich auf eine Lenksäulenanordnung für ein Fahrzeug und ein Verfahren zur Herstellung von Komponenten für eine derartige Lenksäulenanordnung.

Gattungsgemäße Lenksäulenanordnungen oder Lenksäulen sind im Einsatzfall in ein Kraftfahrzeug eingebaut und übertragen die vom Fahrer auf ein Lenkrad aufgebrachten Drehmomente in ein Lenksystem des Fahrzeuges. Weiterhin müssen Lenksäulen im Einsatzfall vielfältige Belastungen aushalten, insbesondere beim Aufprall des Fahrzeuges auf ein Hindernis - dem Crashfall.

Die DE 10 2005 034 952 B3 offenbart beispielsweise eine Lenksäule, die in ihrer Höhe und ihrer Neigung verstellbar ist. Eine Lenkspindel wird in einem Stellteil, das auch als Manteleinheit bezeichnet wird, drehbar gelagert. Die Manteleinheit ist in einem Halteteil gehalten und das Halteteil ist in einer Halteklammer, die an einer Fahrzeugkarosserie befestigt werden kann, gelagert. Zur Anpassung der Position der Lenkspindel, beziehungsweise eines daran zu befestigenden Lenkrades, ist ein Klemmsystem vorgesehen, das zwischen einer geöffneten Stellung und einer geschlossenen Stellung mit einem Stellhebel verstellbar ist. In der geöffneten Stellung des Klemmsystems kann die Manteleinheit in ihrer Längsrichtung in Bezug zum Halteteil verschoben werden und gleichzeitig das Halteteil in seiner Neigung um eine Schwenkachse gegenüber der Halteklammer verschwenkt werden. In der geschlossenen Stellung des Klemmsystems ist die Lenkspindel gegenüber der karosseriefesten Halteklammer fixiert. Derartige Lenksäulen und Klemmsysteme sind im Stand der Technik in verschiedenen Ausführungen bekannt.

Die Komponenten derartiger Lenksäulen sind entsprechend dem Stand der Technik aus Stahl, Aluminium- oder Magnesiumguss dargestellt.

Ein genereller Wunsch besteht darin, zur günstigen Beeinflussung des Kraftstoffverbrauchs und zur Verbesserung der Fahrdynamik von Kraftfahrzeugen, sowie zur Erhöhung der Reichweite von Elektromobilen, derartige Lenksäulen besonders leicht und mit hoher Steifigkeit auszubilden. Hierzu schlägt die DE 101 55 891 B4 allgemein vor, die Manteleinheit, die das zentrale Lagerrohr bildet, aus einem Thermoplast oder einem Thermoplastrohr mit Glas- oder Kohlenstoff- Faser- Füllung darzustellen. Allerdings lässt die Offenbarung offen, wie ein derartiges Lagerrohr konkret ausgebildet sein kann.

Die EP 0091671 B1 offenbart eine Sicherheitslenksäule, bei der ein Rohrteil der Lenkspindel einstückig mit einem starren Lenksäulenabschnitt aus faserverstärktem Kunststoff gebildet ist. Dabei wird offenbart, dass die Lenksäule in einer Wickeltechnik um einen Kern, beispielsweise aus Polyurethan-Hartschaum hergestellt wird. Dabei sind die Möglichkeiten für die Gestaltung der Lenksäule jedoch stark eingeschränkt.

Aus der DE 102 42 527 A1 ist ein aus Polymerverbundmaterial bestehendes Lenksäulen-Stützgehäuse mit einem Montageträger bekannt, wobei das Lenksäulenstützgehäuse und der Montageträger eine Vielzahl an Fasern innerhalb eines Verbundmaterials aufweisen.

Weiterhin offenbart die DE 198 09 264 A1 eine Fasergelegeanordnung und Verfahren zur Herstellung eines Vorformlings. In der Fasergelegeanordnung werden einzelne Faserlagen aufeinandergelegt und mit Nähfäden vernäht, wobei teilweise Klebevliese als Zwischenlagen eingelegt werden. Durch diese Anordnung wird eine schmelzfähige Schicht eingebracht, die erst bei einem Umformungsprozess aktiviert wird und nach der Umformung in eine gewünschte dreidimensionale Gestalt für eine bleibende Verfestigung des Vorformlings sorgt. Weiterhin zeigt die WO99/03716 A1 ein Lenksäule gemäß dem Oberbegriff des Anspruchs 1. Aufgabe der Erfindung ist es, eine Leichtbaulenksäule bereitzustellen, bei der ein großes Maß an Designfreiheit gegeben ist.

Gelöst wird die Aufgabe durch eine Lenksäule entsprechend dem Merkmal des Anspruch 1. In den Unteransprüchen sind vorteilhafte Weiterbildungen der Erfindung dargestellt. Weil bei einer Lenksäule für ein Kraftfahrzeug mit einer in einer Lenkspindellagereinheit um eine Längsachse drehbar gelagerten Lenkspindel und mit einer Trageinheit, die dazu ausgebildet ist, die Verbindung der Lenkspindellagereinheit mit der Karosserie des Kraftfahrzeuges auszubilden, bei der mindestens ein Bauteil der Lenksäule mindestens teilweise aus einem faserverstärkten Verbundwerkstoff gebildet ist, weiter vorgesehen ist, dass das Bauteil im Kraftfluss der Lenksäule zwischen der Lenkspindel und der Karosserie liegt und dass mindestens eine Pultrusionsschicht vorgesehen ist, welche als Verstärkungsfasern mehrere in Richtung der Längsachse und zueinander parallel ausgerichtete Pultrusionsfasern aufweist, entsteht ein großes Maß an Designfreiheit. So kann auf einen Kern bei der Herstellung des Faserverbundbauteils verzichtet werden. Es ist auch möglich, an der äußeren Oberfläche in Umfangsrichtung konkave Bereiche auszubilden, was bei Flecht- oder Wickelverfahren nicht oder nur sehr aufwändig realisierbar ist.

Weiter wird die Aufgabe durch ein Verfahren entsprechend den Merkmalen der Patentansprüche 14 und 15 gelöst. In den Unteransprüchen sind vorteilhafte Weiterbildungen der Erfindung dargestellt.

Weil das Verfahren zur Herstellung einer Lenksäule mit einer Lenkspindel, die um ihre Achse drehbar in einer Lenkspindellagereinheit gelagert ist, und mit einer Trageinheit, die dazu ausgebildet ist, die Lenkspindellagereinheit direkt oder indirekt mit der Karosserie des Kraftfahrzeuges zu verbinden, wobei zumindest eines der Bauteile der Lenksäule als Faserverbundbauteil ausgebildet ist, die folgenden Schritte umfasst:
1.) Pultrudieren von Trägerfasern zu einem Träger;
2.) Bildung eines Formstücks durch Umflechten und/oder Umwickeln des Trägers mit Verstärkungsfasern entlang vorgegebener Bahnen auf der Oberfläche des Trägers;
3.) Verbringen des Formstücks in ein Werkzeug, wobei entweder die Trägerfasern und die Verstärkungsfasern vor ihrer Verarbeitung mit einem aushärtbarem Harz getränkt sind oder nach der Bildung des Formstücks mit einem aushärtbarem Harz getränkt sind und anschließend
4.) Aushärten des Harzes und Bildung des Faserverbundbauteils;
5.) sowie Montage der Lenksäule unter Einbau des Faserverbundbauteils in die Lenksäule,
kann eine Lenksäule mit relativ geringem Gewicht und hoher Steifigkeit mit einem hohen Maß an Designfreiheit dargestellt werden.

Der mit der Pultrusion gebildete Träger kann dabei von seiner inneren Oberfläche und/oder von seiner äußeren Oberfläche Umflochten und oder Umwickelt sein, zur Ausbildung des Formstücks. Insbesondere ist es auch denkbar und möglich, mehrere Träger im Pultrusionsverfahren auszubilden und unter Zwischenlage von geflochtenen und/oder gewickelten Schichten das Formstück auszubilden.

Insbesondere ist die Erfindung anwendbar auf eine Lenksäulenanordnung, die in ihrer Länge und/oder Neigung verstellbar ist. Hierzu wird die Trageinheit mit Vorteil durch ein Halteteil gebildet, das mit der Karosserie des Kraftfahrzeugs verbindbar ist, und eine Führungsklammer aufnimmt, die die Lenkspindellagereinheit hält. Weiter ist im Falle einer verstellbaren Lenksäule ein Fixiersystem vorgesehen, das wahlweise zwischen einer geöffneten und einer geschlossenen Stellung eingestellt werden kann. Bei geöffnetem Fixiersystem kann die Lenkspindel verstellt werden, indem bevorzugt die Führungsklammer in einer Schwenkachse im Halteteil verschwenkbar ist und die Lenkspindellagereinheit in der Führungsklammer verschiebbar ist. Die Erfindung ist jedoch auch auf verstellbare Lenksäulen anwendbar, bei denen die Verstellfunktionen in anderer Weise dargestellt sind, wie sie im Stand der Technik bekannt sind.

Vorzugsweise tragen die Pultrusionsfasern wenigstens eine aus Fasern gebildete Gelegeschicht, beispielsweise aus einem Gewebe, einem Gestrick, einem Gewirk oder einem Geflecht oder einer Umwicklung. Dabei wird bevorzugt, wenn die Gelegeschicht ein Gewebe ist, da so eine besonders gute Steifigkeit gegenüber Torsion erzielbar ist.

Wenn die Pultrusionsfasern die Lenkspindel schalenartig in Umfangsrichtung um wenigstens 180° umgeben, kann schon bei der Herstellung des Bauteils eine für die spätere Montage vorteilhafte Geometrie erzielt werden, ohne dass das erzeugte Bauteil nachträglich aufgeschnitten werden muss, wie dies bei rohrförmigen Rohlingen der Fall ist.

Die Torsionssteifigkeit wird weiter verbessert, wenn die wenigstens eine Gelegeschicht ein Gewebe oder ein Geflecht umfasst, mit mehr als 50% Anteil von innerhalb der Gelegeschicht ausgerichteten Fasern, wobei diese Fasern in einem Winkel zwischen 20° und 70° zu den Pultrusionsfasern ausgerichtet sind.

Vorteilhaft für die Gesamtbelastbarkeit des Bauteils ist es, wenn wenigstens zwei Gelegeschichten vorgesehen sind, wobei die Pultrusionsschicht zwischen den Gelegeschichten angeordnet ist und wenigstens eine Gelegeschicht außen liegt und die wenigstens eine andere Gelegeschicht innen liegt.

Ein guter Kompromiss zwischen mechanischen Eigenschaften, Gewicht und Kosten wird dadurch erzielt, dass die wenigstens eine außen liegende Schicht aus Glasfaser und die Pultrusionsschicht und/oder die wenigstens eine innen liegende Schicht aus Kohlefaser hergestellt sind.

Das Gesamtgewicht der Lenksäule wird verringert, wenn das aus Faserverbundwerkstoff hergestellte Bauteil die Lenkspindel mittelbar oder unmittelbar lagert. Hierzu wird weiter bevorzugt, dass die wenigstens eine Gelegeschicht angeformte, beispielsweise stoffschlüssig angebrachte oder einlaminierte Funktionselemente trägt.

Die Funktionselemente sind vorzugsweise ausgewählt sind aus der Gruppe, die Befestigungslaschen, Führungen, Bewegungsbegrenzungen und Halter für Kabelbäume umfasst. Insbesondere können die Funktionselemente Blechlaschen mit Öffnungen, Bohrungen oder Ausnehmungen sein.

Bei der erfindungsgemäßen Lenksäule ist es besonders bevorzugt, wenn das Bauteil eine Führungsklammer für die Lenkspindellagereinheit ist. Die Anbringung von weiteren Funktionselementen der Lenksäule wird vereinfacht, wenn die Führungsklammer in einem mittigen Bereich an einer im Betrieb oben liegenden Seite offen ist. Hier kann beispielsweise ein Lenkschloss angeordnet werden.

Im Folgenden wird die Erfindung anhand von Zeichnungen veranschaulicht. Es zeigen:
- Figur 1:: eine Darstellung von Prozessschritten basierend auf Pultrusion zur Herstellung eines Rohlings in Faserverbundtechnologie,
- Figur 2:: eine andere Anordnung der Technologie aus Figur 1,
- Figur 3:: ein Beispiel einer Werkzeugform,
- Figur 4:: eine schematische Darstellung von Verfahrensschritten zur Herstellung von Teilen der erfindungsgemäßen Lenksäule,
- Figur 5:: eine Ansicht eines Ausführungsbeispiels eines Rohlings eines Mantelrohrs, der von einem endlosen Rohling abgetrennt wurde,
- Figur 6:: eine Ansicht des Rohlings aus Fig. 5, der zu einem Mantelrohr weiterverarbeitet wird,
- Figur 7:: eine Ansicht des Rohlings aus Fig. 5 und 6, der durch eine Halterung für die Wegfahrsperre komplettiert wird,
- Figur 8:: ein Schnittbild eines bevorzugten Schichtenaufbaus eines Rohlings,
- Figur 9, 10:: ein alternatives Ausführungsbeispiel der Fig. 3 und 5,
- Figur 11:: eine Ansicht eines weiteren Ausführungsbeispiels eines mit Pultrusion hergestellten Rohlings einer Führungsklammer einer erfindungsgemäßen Lenksäule,
- Figur 12:: eine Ansicht des Rohlings aus Fig. 11 komplettiert durch Endstück, Lageraufnahme, Lager und Keilelemente,
- Figur 13:: eine Ansicht der vormontierten Baugruppe mit den Einzelteilen aus Fig. 12,
- Figur 14:: eine Ansicht der vormontierten Baugruppe aus Fig. 13, wobei durch eine Trennoperation eine gewünschte Öffnung in der Führungsklammer erhalten wird,
- Figur 15:: eine alternative Ausführungsform einer Führungsklammer der erfindungsgemäßen Lenksäule,
- Figur 16:: eine schematische Ansicht des Eingriffs eines Spannbolzens in einen Führungssteg, sowie
- Figur 17, 18:: eine Ansicht der vollständigen Lenksäule mit Mantelrohr und Führungsklammer.

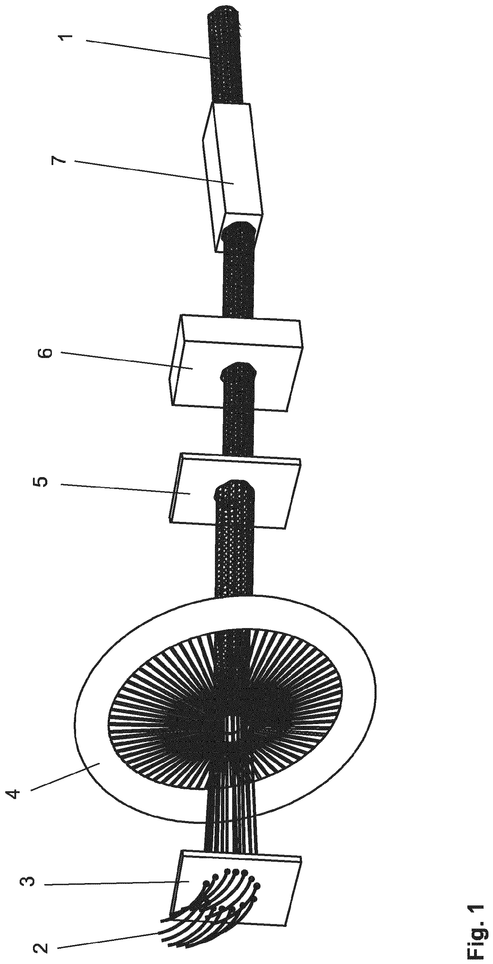

Figur 1 zeigt ein Verfahren zur Herstellung eines Bauteils aus Faserverbundstoffwerkstoff durch Pultrusion und Flechten. Faserverbundwerkstoffe sind Materialien aus Verstärkungsfasern, die in eine Matrix eingebunden sind, wodurch der Werkstoff extrem leicht ausgebildet ist. Zudem haben Faserverbundwerkstoffe im Allgemeinen eine höhere spezifische Steifigkeit als metallische Werkstoffe. Somit können bei gleichen Steifigkeitseigenschaften die Gewichte der Bauteile reduziert werden. Wahlweise oder in Kombination können auch die Steifigkeiten der Bauteile erhöht werden, um z.B. Schwingungen am Lenkrad, angeregt durch die Straße oder den Motor, zu reduzieren und so die Komforteigenschaften zu verbessern.

Zur Erhöhung der Steifigkeit und Festigkeit des Bauteils in Umfangsrichtung zur Aufnahme von Lagern oder Übertragung von Torsionsmomenten kann beim Pultrusionsverfahren ein oder mehrere weitere Verfahren vor- oder auch nachgeschaltet werden. Dafür bieten sich das Wickel- und Flechtverfahren an.

Folgende Verfahrensabläufe sind denkbar:
a) Pultrusion -> Wickeln
b) Pultrusion -> Flechten
c) Flechtpultrusion: Flechten, um einen Kern -> Pultrusion
d) Wickelpultrusion: Wickeln, um einen Kern -> Pultrusion

In allen Varianten kann eine nachfolgende Flecht- und oder Wickeloperation und/oder auch eine Pultrusionsoperation nachgeschaltet werden.

Anschließend wird die Matrix in einem Werkzeug ausgehärtet.

Entsprechend der Figur 1 wird mittels Pultrusion (auch Strangziehen genannt) und nachgeschaltetem Flechten ein Rohling 1 aus Faserverbundwerkstoff hergestellt.

Bei dem hier dargestellten Verfahrensablauf b) werden vorimprägnierte Rovings 2 bestehend aus parallel angeordneten, hier nicht dargestellten, vorimprägnierten ungehärteten Endlosfasern, verwendet.

Durch eine hier ebenfalls nicht dargestellte Zugeinrichtung am Ende des Verfahrensablaufs werden die Rovings 2 durch eine erste Schablone 3 gezogen und in die gewünschte Profilform gebracht. Die von der Zugeinrichtung aufgebrachte Zugkraft ist dabei so groß, dass die Anordnung der Rovings 2 und somit die Profilform auch in den übrigen Verfahrensschritten beibehalten wird.

Nach der ersten Schablone 3 werden die in Form gebrachten Rovings 2 durch einen Flechtkopf 4 geführt. Durch das Nachschalten des Flechtprozesses kann das pultrudierte Profil als Gelege bzw. Kern verwendet und mit einer oder mehreren gewickelten oder geflochten Lagen verstärkt werden. Das gleiche Resultat wie beim Flechtprozess kann auch durch Wickeln erreicht werden. Dagegen werden die Rovings beim Wickeln nicht in kreuzweiser Richtungsstruktur angeordnet sondern rundherum gewickelt. Dabei können mehrere Rovings entsprechend versetzt gewickelt werden, so dass praktisch die gleiche Anordnung der Rovings entsteht.

Um die Formgebung zu verfeinern wird nach dem Flechtkopf 4 das gesamte Geflecht durch eine zweite Schablone 5 und eine dritte Schablone 6 geführt. Darauffolgend wird das Geflecht durch eine beheizte Härtungsstrecke 7 gezogen. In der Härtungsstrecke 7 verfestigt sich das Kunstharz durch Wärmeeinwirkung und bildet einen Rohling 1 aus. Hierfür ist das Harz mit einem Härter versetzt. Diese Aushärtung kann erfolgen durch Einbringen einer erhöhten Temperatur und/oder durch Einbringen von Ultraschall und/oder durch eine Einbringung von ultraviolettem Licht.

Mit dem Kern oder Formkern 11 kann dabei das Formteil im Werkzeug verdichtet werden.

Mit Vorteil erstreckt sich der Formkern 11 über die gesamte Strecke vom Beginn der Pultrusion oder des Flecht- oder des Wickelprozesses bis zum Aushärten des aushärtbaren Harzes. Dadurch wird es möglich, ein Geflecht oder eine Faserwicklung um den Kern herum innerhalb des durch die Pultrusion gebildeten Trägers anzuordnen.

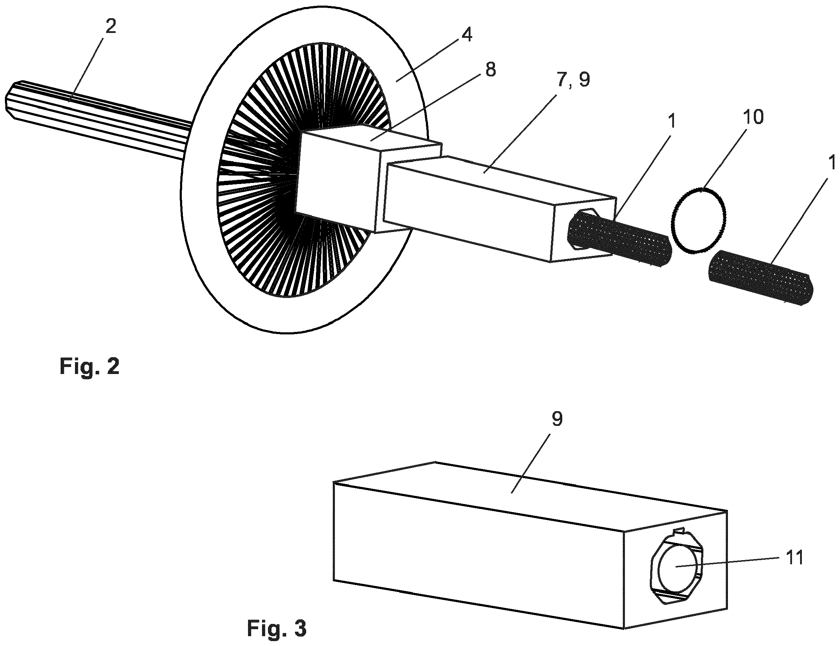

In der Figur 2 ist eine andere Ausführungsform des Verfahrensablaufs b) dargestellt.

Hierbei werden Rovings 2 durch das Ziehen durch eine erste, hier nicht dargestellte Schablone in die Profilform gebracht. Danach wird wie in der vorherigen Form durch das Einbringen in den Flechtkopf 4 auf die Anordnung der Rovings 2 eine zweite Lage aus Rovings 2 geflochten. Das Geflecht durchläuft nach dem Flechtkopf 4 ein Tränkbad 8 in dem es mit flüssigem Kunstharz imprägniert wird. Anschließend wird in einer beheizten Härtungsstrecke 7, die gleichzeitig eine Werkzeugform 9 bildet, das Kunstharz ausgehärtet. Die vorgesehene Werkzeugform 9 stellt die Profilform sicher und kann weitere Formungen vornehmen. Nach dem Aushärten wird der Rohling 1 durch eine Trenneinrichtung 10 zurechtgeschnitten bzw. gesägt.

Alternativ zur Imprägnierung der Rovings 2 in einem Tränkbad ist es auch denkbar und möglich, das aushärtbare Harz direkt in das Wergzeug, bevorzugt mit Druck, einzubringen und damit die Fasern mit dem Harz zu imprägnieren.

Figur 3 zeigt eine Werkzeugform 9 mit einem Formkern 11. Formkerne 11 dienen der Formgebung des Rohlings 7 und können alleine oder zusätzlich zu Schablonen eingesetzt werden. Wiederverwendbare Formkerne 11 werden dabei bevorzugt aus Aluminium oder Stahl hergestellt. Der Formkern kann einseitig aus dem Werkzeug herausragen und sich bis zum Flechtkopf 4 oder bis zur ersten Schablone 3 reichen. Diese Anordnung ist besonders bei den oben genannten Verfahrensabläufen c) und d) vorteilhaft oder sogar erforderlich. Grundsätzlich sind Formkerne 11 aus Strukturschaum bekannt, die im Faserverbundbauteil verbleiben können oder lösliche Formkerne 11, die nach der Faserverbundkonsolidierung ausgewaschen werden. Derartige Kerne sind jedoch nicht zu bevorzugen.

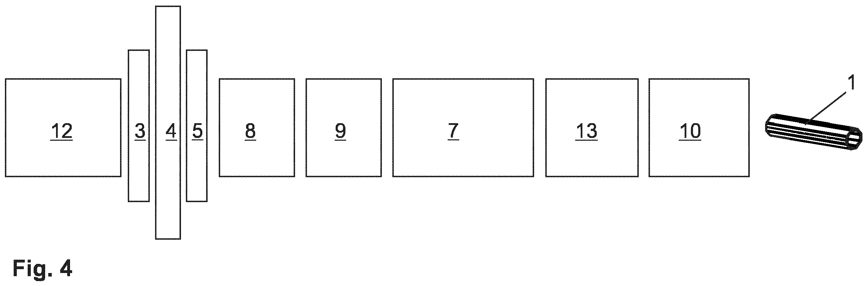

Eine schematische Darstellung des Verfahrensablaufs b) ist in Fig. 4 wiedergegeben. Die Rovings 2 werden in einem ersten Schritt durch eine Rollenabwicklung 12 abgewickelt und gespannt. Danach durchlaufen sie die erste Schablone 3 bevor durch den Flechtkopf 4 ein Geflecht aufgebracht wird und das gesamte Profil durch die zweite Schablone 5 geführt wird. Anschließend durchlaufen die Rovings 2 das Tränkbad 8, die Werkzeugform 9 und die Härtungsstrecke 7. Das in dem Tränkbad 8 aufgenommene Harz wird in der Härtungsstrecke 7 ausgehärtet. Hinter der Härtungsstrecke 7 befindet sich eine Zugeinrichtung 13, die in den vorhergehenden Figuren 1 und 2 nicht gezeigt wurde. Durch diese Zugeinrichtung 13 werden die Rovings 2 von links nach rechts durch die einzelnen Komponenten des Aufbaus gespannt und gezogen. Im letzten Schritt des Verfahrens sorgt die Trenneinrichtung 10 dafür, dass die Länge des Rohlings 1 zurechtgeschnitten wird.

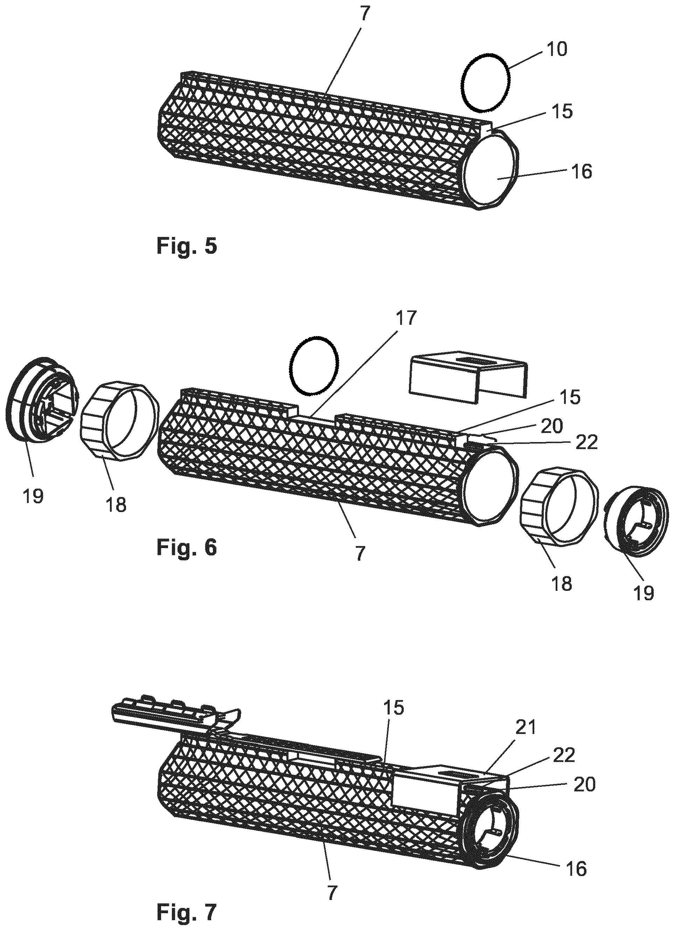

Der Rohling 1 wird in weiteren Schritten (Fig. 5-7) zu einem Mantelrohr 14 einer erfindungsgemäßen Lenksäule komplettiert. Wie in Fig. 5 angedeutet ist, wird hierzu in einen Führungssteg 15 des Rohlings 7 an einer Stirnseite 16 eine erste Ausfräsung mit einer Öffnung eingebracht. Im Weiteren (Fig. 6) wird eine zweite Ausfräsung 17 am Führungssteg 15 eingebracht, die im Zusammenwirken mit weiteren Elementen als ein Längenanschlag der erfindungsgemäßen Lenksäule dienen kann. Weiterhin werden beiderseits des Rohlings 1 zwei Lageraufnahmen 18 und entsprechende Lager 19 zur Lagerung einer Lenkspindel an den Rohling 1 angefügt. In Fig. 7 ist das vormontierte Mantelrohr 14 gezeigt. Zum Abschluss wird auf die erste Ausfräsung 20 des Führungsstegs 15 an der Stirnseite 16 des Rohlings 1 ein Halter 21 für eine hier nicht gezeigte Wegfahrsperre angebracht, so dass durch die Öffnung 22 die Wegfahrsperre in eine hier nicht gezeigte Lenkwelle eingreifen kann.

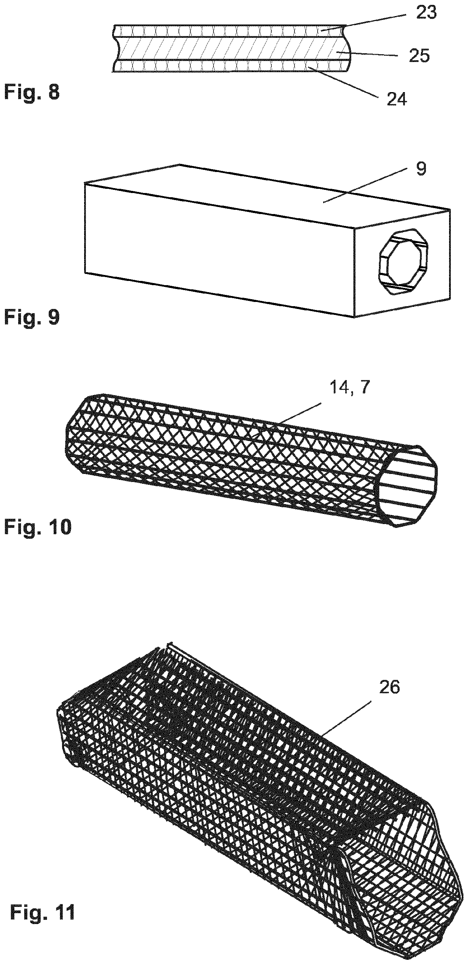

In der Figur 8 ist ein Profil eines bevorzugten Schichtenaufbaus eines Rohlings 1 dargestellt. Das Profil zeigt das ausgehärtete Kunstharz mit den darin eingebetteten Rovings 2 in drei Schichten. Schraffuren sind dabei nicht als Rovings 2 anzusehen.

Die innere Schicht 23 besteht aus Pultrusionsrovings, die bei überwiegend zug- oder biegebelasteten Bauteilen, wie beispielsweise dem Mantelrohr einer Lenksäule, kraftflussgerecht in axialer Richtung im Bauteil liegen.

Die äußeren Schichten 24, 25 des Schichtaufbaus bestehen aus Anordnungen in Flecht- oder Wickeltechnologie mit einem Winkel von etwa +/-45°. Durch die ±45°-orientierte Faserlagen können Schubbeanspruchungen, die durch Querkräfte hervorgerufen werden, aufgenommen werden.

Alle Fasern des Schichtenaufbaus können aus Glas, Aramid- oder Kohlenstoff bestehen. Andere Werkstoffe können auch zur Ausbildung der Fasern dienen. Bevorzugt sind die äusseren Schichten 24, 25 mit Glasfasern und die inneren Schichten 23, die pultrudierte Schicht, mit Kohlenstofffasern ausgebildet.

Dabei werden Glasfasern für die äusseren Schichten 24, 25, die Bereiche, in denen ein Kontakt zu anderen Bauelementen, insbesondere metallischen Bauelementen, der Lenksäule vorgesehen ist, zur Verbesserung der Korrosionsbeständigkeit eingesetzt.

In den Figuren 9 und 10 ist eine Werkzeugform 9 und ein Rohling 1 einer alternative Darstellung eines Mantelrohrs 14 veranschaulicht, bei der kein Führungssteg vorgesehen ist und das Mantelrohr 14 in einer mehreckigen polygonalen Gestalt ausgebildet ist. Ein Vorteil des erfindungsgemäßen Verfahrens ist, dass die Ausgestaltung des Profils frei gewählt werden kann und somit die Gestaltung des Mantelrohrs nicht eingeschränkt ist.

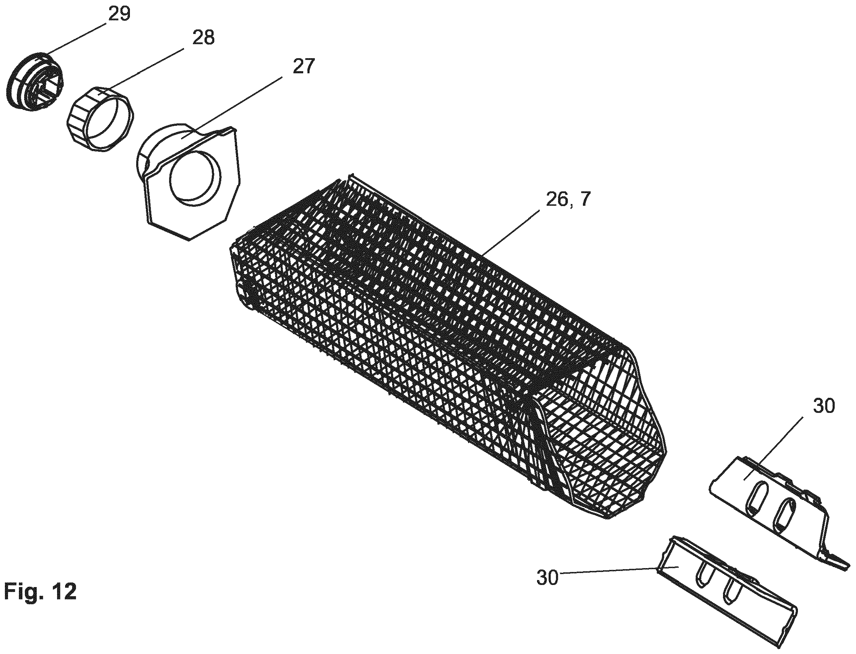

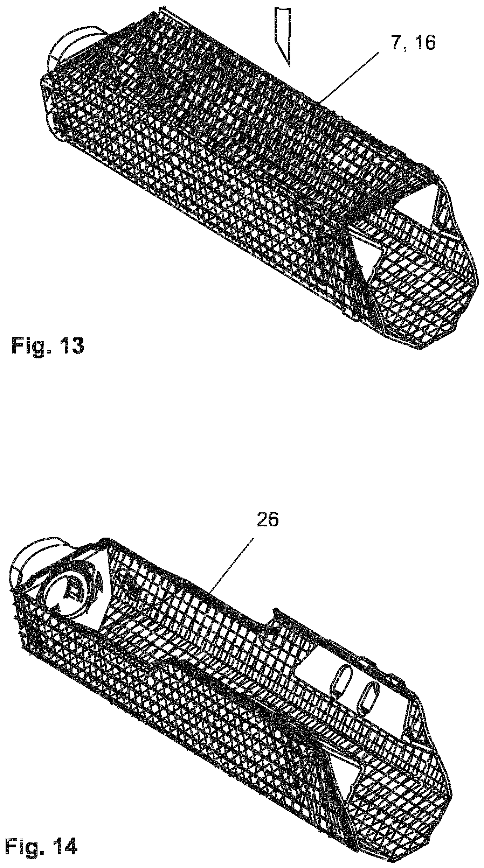

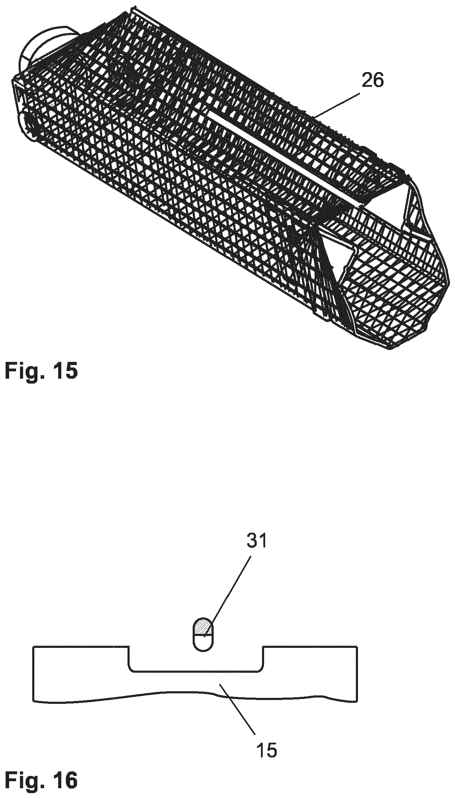

Weiterhin kann der Querschnitt eines Rohlings beim erfindungsgemäßen Verfahren in einem großen Bereich gewählt werden. Es können sowohl geschlossene als auch offene Bauteile hergestellt werden, zum Beispiel eine Führungsklammer. Die Figuren 11 bis 14 veranschaulichen die Darstellung einer Führungsklammer 26. Wie in den Figuren 1, 2 und 3 dargestellt, wird ein entsprechender Rohling 1 in Kombination von Pultrusion und Flecht- und Wickeltechnologie hergestellt. Anschliessend werden entsprechend Figur 12 ein Endstück 27, eine Lageraufnahme 28 und ein Lager 29 für die Lenkwelle angefügt, sowie Keilelemente 30 für das Spannsystem der Lenksäule in dem Rohling 1 eingefügt. In Figur 13 ist eine so vormontierte Baugruppe dargestellt. Anschliessend wird in einer Trennoperation der umfanggeschlossene Rohling 1 aufgetrennt, um die gewünschte Öffnung im Schwenkhebel 26 zu erhalten. In Figur 15 ist eine alternative Ausführungsform der Führungsklammer 26 mit den entsprechenden Auftrennungen dargestellt. Die Figur 16 zeigt den Eingriff eines Spannbolzens 31 in den Führungssteg 15, der in geöffneter Position des Klemmsystems die Längenverstellung mit den Anschlägen begrenzt.

Zur Bildung der Lenksäule werden die einzelnen Bauteile, von denen zumindest ein Bauteil mit der beschriebenen Technologie hergestellt wurde, zusammen montiert.

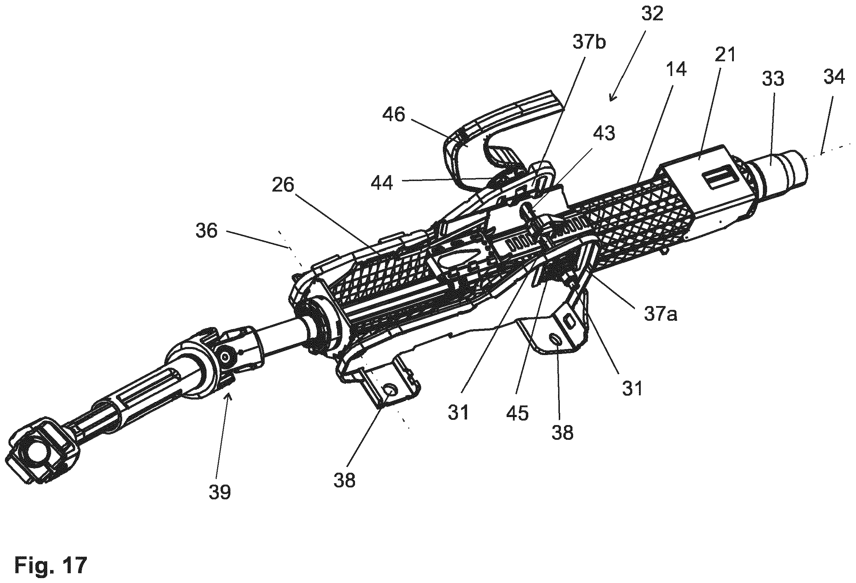

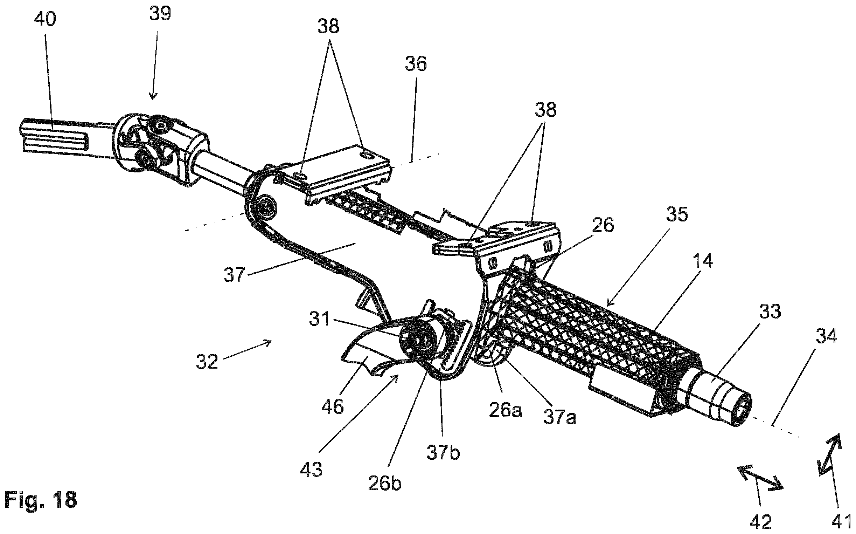

Die Figuren 17 und 18 veranschaulichen eine erfindungsgemäße Lenksäule 32, die eine Lenkspindel 33 umfasst, die um ihre Drehachse 34 drehbar in einer Lenkspindellagereinheit 35, aufweisend ein Mantelrohr 14, gelagert ist. Das Mantelrohr 14 ist in einer Führungsklammer 26 entlang der Längsachse 34 der Lenkspindel 33 verschiebbar geführt. Die Führungsklammer 26 ist um eine Schwenkachse 36 in einem Halteteil 37 schwenkbar gelagert. Das Halteteil 37 kann in Befestigungspunkten 38 an der nicht dargestellten Karosserie befestigt werden. Die von einem Fahrer über ein (nicht dargestelltes) Lenkrad in die Lenkspindel 33 eingebrachte Drehbewegung wird über ein Kardangelenk 39 und weitere Lenkwellenteile 40 in das nicht dargestellte Lenkgetriebe eingebracht. Zur Erhöhung des Komforts des Fahrers kann die Lenksäule 32 in ihrer Höhe in die Verstellrichtung 41 und in ihrer Länge in die Verstellrichtung 42 verstellt werden. Hierzu ist ein Fixiermechanismus 43 vorgesehen, der einen im Stand der Technik bekannten Spannapparat umfasst. Der Spannapparat weist den Spannbolzen 32 auf, einen Nockenmechanismus 44, ein Gegendrucklager 45 und einen Spannhebel 46. Durch Verdrehung des Spannhebels 46 werden die beiden Nocken des Nockenmechanismus 44 gegeneinander verdreht und die Seitenwangen 37a, 37b zusammengezogen, wodurch eine reibschlüssige Verspannung der Seitenwangen 37a, 37b des Halteteils 37 mit den Seitenflächen der Führungsklammer 26 und wiederum mit Seitenflächen des Mantelrohrs 14 erfolgt.

Der Spannbolzen 31 durchsetzt Langlöcher in den Seitenwangen 37a, 37b des Halteteils 37 und Löcher in den Seitenflächen 26a, 26b der Führungsklammer 26. Der Nockenmechanismus 44 ist auf den einen Ende des Spannbolzens angeordnet und das Drucklager 45 auf dem anderen Ende des Spannbolzens 31 angeordnet. Die Seitenwangen 37a, 37b, sowie die Seitenflächen 26a, 26b, als auch das Mantelrohr 14 sind zwischen dem Nockenmechanismus 44 und den Drucklager 45 angeordnet.

Durch Drehen des Spannhebels 46 kann das Fixiersystem 43 wahlweise in eine geöffnete Stellung oder eine geschlossene Stellung umgeschaltet werden. In der geöffneten Stellung kann die Lenkspindel 33, beziehungsweise das daran befestigte Lenkrad (nicht dargestellt in den Figuren) in ihrer Position verstellt werden, insbesondere in der Längsrichtung 42 und der Höhen- oder Neigungsrichtung 41 verschoben werden. In der geschlossenen Stellung des Fixiersystems 43 ist die Lenksäule 32 in ihrer Position fixiert.

### Bezugszeichenliste

- 1.: Rohling
- 2.: Roving
- 3.: Schablone
- 4.: Flechtkopf
- 5.: Schablone
- 6.: Schablone
- 7.: Härtungsstrecke
- 8.: Tränkbad
- 9.: Werkzeugform
- 10.: Trenneinrichtung
- 11.: Formkern
- 12.: Rollenabwicklung
- 13.: Zugeinrichtung
- 14.: Mantelrohr
- 15.: Führungssteg
- 16.: Stirnseite
- 17.: Ausfräsung
- 18.: Lageraufnahmen
- 19.: Lager
- 20.: Ausfräsung
- 21.: Halter
- 22.: Öffnung
- 23.: Innere Schicht
- 24.: Äußere Schicht
- 25.: Äußere Schicht
- 26.: Führungsklammer
- 27.: Endstück
- 28.: Lageraufnahme
- 29.: Lager
- 30.: Keilelement
- 31.: Spannbolzen
- 32.: Lenksäule
- 33.: Lenkspindel
- 34.: Drehachse
- 35.: Lenkspindellagereinheit
- 36.: Schwenkachse
- 37.: Halteteil
- 38.: Befestigungspunkte
- 39.: Kardangelenk
- 40.: Lenkwellenteil
- 41.: Verstellrichtung
- 42.: Verstellrichtung
- 43.: Fixiermechanismus
- 44.: Nockenmechanismus
- 45.: Gegendrucklager
- 46.: Spannhebel

## Patentansprüche

1. Lenksäule (32) für ein Kraftfahrzeug mit einer in einer Lenkspindellagereinheit (35) um eine Längsachse drehbar gelagerten Lenkspindel (33) und mit einer Trageinheit, die dazu ausgebildet ist, die Verbindung der Lenkspindellagereinheit (35) mit einer Karosserie des Kraftfahrzeuges auszubilden, wobei mindestens ein Bauteil der Lenksäule (32) mindestens teilweise aus einem faserverstärkten Verbundwerkstoff gebildet ist, **dadurch gekennzeichnet, dass** das Bauteil im Kraftfluss der Lenksäule (32) zwischen der Lenkspindel (33) und der Karosserie liegt und dass mindestens eine Pultrusionsschicht vorgesehen ist, welche als Verstärkungsfasern mehrere in Richtung der Längsachse und zueinander parallel ausgerichtete Pultrusionsfasern aufweist.

2. Lenksäule (32) nach Anspruch 1, **dadurch gekennzeichnet, dass** die Pultrusionsfasern wenigstens eine aus Fasern gebildete Gelegeschicht tragen.

3. Lenksäule (32) nach Anspruch 2, **dadurch gekennzeichnet, dass** die Gelegeschicht ein Gewebe ist.

4. Lenksäule (32) nach einem der vorangehenden Ansprüche,
**dadurch gekennzeichnet, dass** die Pultrusionsfasern die Lenkspindel (33) schalenartig in Umfangsrichtung um wenigstens 180° umgeben.

5. Lenksäule (32) nach einem der Ansprüche 2 bis 4,
**dadurch gekennzeichnet, dass** die wenigstens eine Gelegeschicht ein Gewebe oder ein Geflecht umfasst, mit mehr als 50% Anteil von innerhalb der Gelegeschicht ausgerichteten Fasern, wobei diese Fasern in einem Winkel zwischen 20° und 70° zu den Pultrusionsfasern ausgerichtet sind.

6. Lenksäule (32) nach einem der vorangehenden Ansprüche 4 oder 5, **dadurch gekennzeichnet, dass** wenigstens zwei Gelegeschichten vorgesehen sind, wobei die Pultrusionsschicht zwischen den Gelegeschichten angeordnet ist und wenigstens eine Gelegeschicht außen liegt und die wenigstens eine andere Gelegeschicht innen liegt.

7. Lenksäule (32) nach Anspruch 6, **dadurch gekennzeichnet, dass** die wenigstens eine außen liegende Schicht aus Glasfasern und die Pultrusionsschicht und/oder die wenigstens eine innen liegende Schicht aus Kohlefasern hergestellt sind.

8. Lenksäule (32) nach einem der vorangehenden Ansprüche,
**dadurch gekennzeichnet, dass** das Bauteil die Lenkspindel (33) mittelbar oder unmittelbar lagert.

9. Lenksäule (32) nach einem der Ansprüche 2 bis 8,
**dadurch gekennzeichnet, dass** die wenigstens eine Gelegeschicht angeformte Funktionselemente trägt.

10. Lenksäule (32) nach Anspruch 9, **dadurch gekennzeichnet, dass** die Funktionselemente ausgewählt sind aus der Gruppe, die Befestigungslaschen, Führungen, Bewegungsbegrenzungen und Halter für Kabelbäume umfasst.

11. Lenksäule (32) nach einem der vorhergehenden Ansprüche 9 oder 10, **dadurch gekennzeichnet, dass** die Funktionselemente Blechlaschen mit Öffnungen, Bohrungen oder Ausnehmungen sind.

12. Lenksäule (32) nach einem der vorhergehenden Ansprüche,
**dadurch gekennzeichnet, dass** das Bauteil eine Führungsklammer (26) für eine Lenkspindellagereinheit (35) ist.

13. Lenksäule (32) nach Anspruch 12, **dadurch gekennzeichnet, dass** die Führungsklammer (26) in einem mittigen Bereich an einer im Betrieb oben liegenden Seite offen ist.

14. Verfahren zur Herstellung einer Lenksäule (32) mit einer Lenkspindel (33), die um ihre Achse drehbar in einer Lenkspindellagereinheit (35) gelagert ist, und mit einer Trageinheit, die dazu ausgebildet ist, die Lenkspindellagereinheit (35) direkt oder indirekt mit der Karosserie des Kraftfahrzeuges zu verbinden, wobei zumindest eines der Bauteile der Lenksäule (32) als Faserverbundbauteil ausgebildet ist, mit folgenden Schritten:
a1) Pultrudieren von Trägerfasern zu einem Träger;
b1) Bildung eines Formstücks durch Umflechten und/oder Umwickeln des Trägers mit Verstärkungsfasern entlang vorgegebener Bahnen auf der Oberfläche des Trägers;
c) Aufbringen eines aushärtbaren Harzes auf das Formstück;
d) Verbringen des Formstücks in ein Werkzeug;
e) Aushärten des Harzes und Bildung des Faserverbundbauteils;
f) Montage der Lenksäule unter Einbau des Faserverbundbauteils in die Lenksäule.

15. Verfahren zur Herstellung einer Lenksäule (32) mit einer Lenkspindel (33), die um ihre Achse drehbar in einer Lenkspindellagereinheit (35) gelagert ist, und mit einer Trageinheit, die dazu ausgebildet ist, die Lenkspindellagereinheit (35) direkt oder indirekt mit der Karosserie des Kraftfahrzeuges zu verbinden, wobei zumindest eines der Bauteile der Lenksäule (32) als Faserverbundbauteil ausgebildet ist, mit folgenden Schritten:
a2) Pultrudieren von Trägerfasern, die mit einem aushärtbarem Harz getränkt sind, zu einem Träger;
b2) Bildung eines Formstücks durch Umflechten und/oder Umwickeln des Trägers mit Verstärkungsfasern, die mit einem aushärtbarem Harz getränkt sind, entlang vorgegebener Bahnen auf der Oberfläche des Trägers;
d) Verbringen des Formstücks in ein Werkzeug;
e) Aushärten des Harzes und Bildung des Faserverbundbauteils;
f) Montage der Lenksäule unter Einbau des Faserverbundbauteils in die Lenksäule.

16. Verfahren zur Herstellung einer Lenksäule (32) nach Anspruch 14 oder 15, **dadurch gekennzeichnet, dass** in einem Verfahrensschritt vor dem Aushärten des aushärtbaren Harzes ein oder mehrere Funktionselemente (15) an vordefinierten Stellen positioniert werden, um durch die daran anschließenden Verfahrensschritte mit den Verstärkungsfasern verbunden zu werden, um mit dem Faserverbundbauteil ein einstückiges Bauteil zu bilden.

17. Verfahren zur Herstellung einer Lenksäule (32) nach einem der Ansprüche 14 bis 16, **dadurch gekennzeichnet, dass** nach dem Aushärten das Formstück an seinem Rand mit einer vorgegebenen Umfangskontur beschnitten wird und/oder Aussparungen eingebracht werden.

## Claims

1. Steering column (32) for a motor vehicle with a steering spindle (33) mounted rotatably about a longitudinal axis in a steering spindle bearing unit (35) and with a supporting unit that is designed to form the connection of the steering spindle bearing unit (35) to a body of the motor vehicle, at least one component of the steering column (32) being at least partially formed from a fiber-reinforced composite material, **characterized in that** the component lies in the flux of force of the steering column (32) between the steering spindle (33) and the body and **in that** at least one pultrusion layer is provided, comprising as reinforcing fibers multiple pultrusion fibers oriented in the direction of the longitudinal axis and parallel to one another.

2. Steering column (32) according to Claim 1, **characterized in that** the pultrusion fibers support at least one structure layer formed by fibers.

3. Steering column (32) according to Claim 2, **characterized in that** the structure layer is a woven fabric.

4. Steering column (32) according to one of the preceding claims, **characterized in that** the pultrusion fibers surround the steering spindle (33) by at least 180° in the circumferential direction in the manner of a shell.

5. Steering column (32) according to one of Claims 2 to 4, **characterized in that** the at least one structure layer comprises a woven fabric or a braid, with a proportion of over 50% of fibers oriented within the structure layer, these fibers being oriented at an angle between 20° and 70° in relation to the pultrusion fibers.

6. Steering column (32) according to either of the preceding Claims 4 and 5, **characterized in that** at least two structure layers are provided, the pultrusion layer being arranged between the structure layers and at least one structure layer lying on the outside and the at least one other structure layer lying on the inside.

7. Steering column (32) according to Claim 6, **characterized in that** the at least one layer that is lying on the outside is produced from glass fibers and the pultrusion layer and/or the at least one layer that is lying on the inside is produced from carbon fibers.

8. Steering column (32) according to one of the preceding claims, **characterized in that** the component bears the steering spindle (33) indirectly or directly.

9. Steering column (32) according to one of Claims 2 to 8, **characterized in that** the at least one structure layer bears functional elements that are molded on.

10. Steering column (32) according to Claim 9, **characterized in that** the functional elements are selected from the group comprising fastening straps, guides, movement restrictors and holders for cable harnesses.

11. Steering column (32) according to either of the preceding Claims 9 and 10, **characterized in that** the functional elements are metal butt straps with openings, drilled holes or clearances.

12. Steering column (32) according to one of the preceding claims, **characterized in that** the component is a guiding clip (26) for a steering spindle bearing unit (35).

13. Steering column (32) according to Claim 12, **characterized in that** the guiding clip (26) is open in a central region on a side that lies upward during operation.

14. Process for producing a steering column (32) with a steering spindle (33) that is mounted rotatably about its axis in a steering spindle bearing unit (35) and with a supporting unit that is designed to connect the steering spindle bearing unit (35) directly or indirectly to the body of the motor vehicle, at least one of the components of the steering column (32) being formed as a fiber-composite component, comprising the following steps:
a1) pultruding supporting fibers to form a support;
b1) forming a shaped piece by braiding and/or winding reinforcing fibers around the support along predetermined paths on the surface of the support;
c) applying a curable resin to the shaped piece;
d) bringing the shaped piece into a mold,
e) curing the resin and forming the fiber composite component;
f) mounting the steering column while incorporating the fiber composite component in the steering column.

15. Process for producing a steering column (32) with a steering spindle (33) that is mounted rotatably about its axis in a steering spindle bearing unit (35) and with a supporting unit that is designed to connect the steering spindle bearing unit (35) directly or indirectly to the body of the motor vehicle, at least one of the components of the steering column (32) being formed as a fiber-composite component, comprising the following steps:
a2) pultruding supporting fibers that have been impregnated with a curable resin to form a support;
b2) forming a shaped piece by braiding and/or winding reinforcing fibers that have been impregnated with a curable resin around the support along predetermined paths on the surface of the support;
d) bringing the shaped piece into a mold,
e) curing the resin and forming the fiber composite component;
f) mounting the steering column while incorporating the fiber composite component in the steering column.

16. Process for producing a steering column (32) according to Claim 14 or 15, **characterized in that** one or more functional elements (15) is/are positioned at predefined points in a step of the process before the curing of the curable resin, in order to be bonded with the reinforcing fibers by the steps of the process which then follow, in order to form a one-piece component with the fiber composite component.

17. Process for producing a steering column (32) according to one of Claims 14 to 16, **characterized in that**, after the curing, the shaped piece is trimmed at its border with a predetermined peripheral contour and/or clearances are introduced.

## Revendications

1. Colonne de direction (32) pour véhicule automobile, présentant une broche de direction (33) montée à rotation autour d'un axe longitudinal dans une unité (35) de montage de broche de direction et une unité de support configurée pour établir la liaison de l'unité (35) de montage de broche de direction avec le bâti du véhicule automobile, au moins un composant de la colonne de direction (32) étant formé au moins en partie d'un matériau composite renforcé de fibres,
**caractérisée en ce que**
le composant est situé dans la ligne d'action de force de la colonne de direction (32) entre la broche de direction (33) et le bâti et
**en ce qu'**au moins une couche de pultrusion qui présente comme fibres de renfort plusieurs fibres de pultrusion orientées dans la direction de l'axe longitudinal et parallèlement les unes aux autres est prévue.

2. Colonne de direction (32) selon la revendication 1, **caractérisée en ce que** les fibres de pultrusion portent au moins une couche formée de fibres.

3. Colonne de direction (32) selon la revendication 2, **caractérisée en ce que** la couche est un tissu.

4. Colonne de direction (32) selon l'une des revendications précédentes, **caractérisée en ce que** les fibres de pultrusion entourent la broche de direction (33) en forme de coquille sur au moins 180° dans la direction périphérique.

5. Colonne de direction (32) selon l'une des revendications 2 à 4, **caractérisée en ce que** la ou les couches comportent un tissu ou un treillis qui présente une proportion de plus de 50 % de fibres orientées à l'intérieur de la couche, ces fibres étant orientées par rapport aux fibres de pultrusion sous un angle compris entre 20° et 70°.

6. Colonne de direction (32) selon l'une des revendications 4 ou 5 qui précèdent, **caractérisée en ce qu'**au moins deux couches sont prévues, la couche de pultrusion étant disposée entre les couches et au moins une couche étant située à l'extérieur et la ou les autres couches à l'intérieur.

7. Colonne de direction (32) selon la revendication 6, **caractérisée en ce que** la ou les couches situées à l'extérieur sont réalisées en fibres de verre et la couche de pultrusion et/ou la ou les couches situées à l'intérieur en fibres de carbone.

8. Colonne de direction (32) selon l'une des revendications précédentes, **caractérisée en ce que** le composant permet un montage direct ou indirect de la broche de direction (33).

9. Colonne de direction (32) selon l'une des revendications 2 à 8, **caractérisée en ce que** la ou les couches portent des éléments fonctionnels façonnés.

10. Colonne de direction (32) selon la revendication 9, **caractérisée en ce que** les éléments fonctionnels sont sélectionnés dans l'ensemble qui comporte les pattes de fixation, les guides, les butées de déplacement et des supports pour des tresses de câbles.

11. Colonne de direction (32) selon l'une des revendications 9 ou 10 qui précèdent, **caractérisée en ce que** les éléments fonctionnels sont des pattes de tôle présentant des ouvertures, des alésages ou des découpes.

12. Colonne de direction (32) selon l'une des revendications précédentes, **caractérisée en ce que** le composant est une pince de guidage (26) d'une unité (35) de montage de colonne de direction.

13. Colonne de direction (32) selon la revendication 12, **caractérisée en ce que** la pince de guidage (26) est ouverte dans sa partie centrale sur un côté situé vers le haut en fonctionnement.

14. Procédé de fabrication d'une colonne de direction (32) qui présente une broche de direction (33) montée à rotation autour d'un axe longitudinal dans une unité (35) de montage de broche de direction et une unité de support configurée pour établir la liaison de l'unité (35) de montage de broche de direction avec le bâti du véhicule automobile, au moins un composant de la colonne de direction (32) étant formé au moins en partie d'un matériau composite renforcé de fibres, présentant les étapes suivantes :
a1) pultrusion de fibres de support pour former un support,
b1) formation d'une pièce façonnée en tressant et/ou en enroulant autour du support des fibres de renfort suivant des pistes prédéterminées situées à la surface du support,
c) application d'une résine de tissage sur la pièce façonnée,
d) amenée de la pièce façonnée dans un outil,
e) durcissement de la résine de formation du composant en composite de fibres et
f) montage de la colonne de direction en incorporant le composant en composite de fibres dans la colonne de direction.

15. Procédé de fabrication d'une colonne de direction (32) qui présente une broche de direction (33) montée à rotation autour d'un axe longitudinal dans une unité (35) de montage de broche de direction et une unité de support configurée pour établir la liaison de l'unité (35) de montage de broche de direction avec le bâti du véhicule automobile, au moins un composant de la colonne de direction (32) étant formé au moins en partie d'un matériau composite renforcé de fibres, présentant les étapes suivantes :
a2) pultrusion de fibres de support imprégnées d'une résine durcissable, pour former un support,
b2) formation d'une pièce façonnée en tressant et/ou en enroulant autour du support des fibres de renfort imprégnées d'une résine durcissable suivant des pistes prédéterminées situées à la surface du support,
d) amenée de la pièce façonnée dans un outil,
e) durcissement de la résine de formation du composant en composite de fibres et
f) montage de la colonne de direction en incorporant le composant en composite de fibres dans la colonne de direction.

16. Procédé de fabrication d'une colonne de direction (32) selon les revendications 14 ou 15, **caractérisé en ce que** dans une étape qui précède le durcissement de la résine durcissable, un ou plusieurs éléments fonctionnels (15) sont disposés en des emplacement prédéfinis pour, par les étapes de procédé qui suivent, être reliés aux fibres de renfort pour former un composant d'un seul tenant avec le composant en composite de fibres.

17. Procédé de fabrication d'une colonne de direction (32) selon l'une des revendications 14 à 16, **caractérisé en ce qu'**après son durcissement, la pièce façonnée est découpée sur son bord suivant un contour périphérique prédéterminé et/ou des découpes y sont ménagées.
